# EUROPÄISCHE PATENTANMELDUNG

(11) **EP 1 690 815 A2**
(43) Veröffentlichungstag der Anmeldung: **16.08.2006**
(21) Anmeldenummer: 06001280.4
(22) Anmeldetag: 21.01.2006
(51) Int. Cl.: B65G 51/06

(54) **Rohrpostbüchse**

(30) Priorität: 09.02.2005 DE 202005001997 U
(71) Anmelder: Aerocom GmbH & Co. Communicationssysteme, 73529 Schwäbisch Gmünd (DE)
(72) Erfinder: Höfler, Bruno, 73614 Schorndorf (DE)
(74) Vertreter: Kohler Schmid Möbus

(57) **Zusammenfassung**

Rohrpostbüchse mit wasserdicht verschließbarem Deckel (3), bestehend aus einem Oberdeckel (5) und einem Dichtdeckel (4), wobei der Dichtdeckel (4) schwimmend auf einer Dichtung (8) des Büchsenkörpers (1) gelagert ist.

## Beschreibung

Die Erfindung bezieht sich auf eine Rohrpostbüchse mit auf einem Büchsenkörper schwenk- und verschließbar angeordnetem Dekkel. Die bekannten Rohrpostbüchsen dieser Art haben jedoch den Nachteil, dass sie nicht wasserdicht sind. Da jedoch neuere Anlagen oft im Freien enden und wasserempfindliche Inhalte weiterleiten oder kontaminiertes Material mit den Büchsen befördert wird, sind solche Büchsen hierfür nicht geeignet. Vielmehr benötigt man Büchsen, welche sowohl von innen als auch von aussen völlig dicht sind.

Der Erfindung liegt daher die Aufgabe zugrunde, eine Rohrpostbüchse zu entwickeln, bei welcher der Deckel mit einfachen Mitteln wasserdicht verschliessbar ist. Diese Aufgabe wird gemäß der Erfindung dadurch gelöst, dass der Deckel aus einem Oberdeckel und einem Dichtdeckel besteht, wobei der Dichtdeckel schwimmend auf einer Dichtung des Büchsenkörpers gelagert ist. Durch die schwimmende Lagerung kann sich der Dichtdeckel mittels der Dichtung dem Büchsenkörper so anpassen, dass immer ein dichter Abschluss desselben erreicht wird.

Nach einem weiteren Merkmal der Erfindung ist der Büchsenkörper durch einen Büchsenkopf abgeschlossen und liegt der Dichtdeckel auf einer Ringdichtung des Büchsenkopfes auf. Auf diese Weise kann man jede Büchse mit dem erfindungsgemäßen Deckel nachrüsten. Zur Verbindung zwischen Oberdeckel und Dichtdeckel ist zweckmäßigerweise eine am Dichtdeckel angeordnete, den Oberdekkel mit Spiel durchbrechende Hülse oder dergleichen angeordnet. Bei einer weiteren Ausbildung der Erfindung ist im Dichtdeckel eine Verstärkungsscheibe auf einem elastischen Ring gelagert und stützt sich der Oberdeckel auf dieser ab.

Der Dichtdeckel ist zur Aufnahme des elastischen Ringes vorzugsweise wangenförmig ausgebildet. Dabei weist die Seitenwand des Dichtdeckels an ihrem dem Boden abgewandten Rand einen nach außen gerichteten Absatz zur Auflage auf dem Büchsenkörper oder einem Teil desselben auf.

Vorzugsweise weist der mit einem Büchsenkopf versehene Büchsenkörper einen Verschluss, bestehend aus einem auf dem Deckel angeordneten, gegen Federkraft zurückschiebbaren und in eine Ausnehmung des Büchsenkopfes einrastenden Schieber auf. Dadurch erreicht man den Vorteil, dass man am Deckel ein aufbrechbares Siegel angeordnen kann, welches mit dem Schieber so verbunden ist, dass das Siegel bei einer Öffnungsbewegung desselben bricht. Zweckmäßigerweise ist der Schieber dabei an seinem der Ausnehmung entgegengesetzten Ende nach oben abgekröpft und das mit dem Deckel verbundene Siegel in einer Ausnehmung des Schieberendes angeordnet. Ein abbrechbares Teil des Siegels greift dabei am Deckel an, so dass es bei einer Bewegung des Schiebers bricht. Vorzugsweise greift das Siegel teilweise in die Hülse des Dichtdeckels ein, so dass sich eine besondere Befestigung an diesem erübrigt.

In der Zeichnung ist eine Ausführungsform des erfindungsgemäßen Büchse dargestellt. Es zeigen:
- Fig. 1: einen Querschnitt der Rohrpostbüchse mit geschlossenem Deckel
- Fig. 2: eine Darstellung nach Fig. 1 mit zurückgeschobenem Schieber,
- Fig. 3: eine Darstellung nach Fig. 1 mit geöffnetem Deckel.

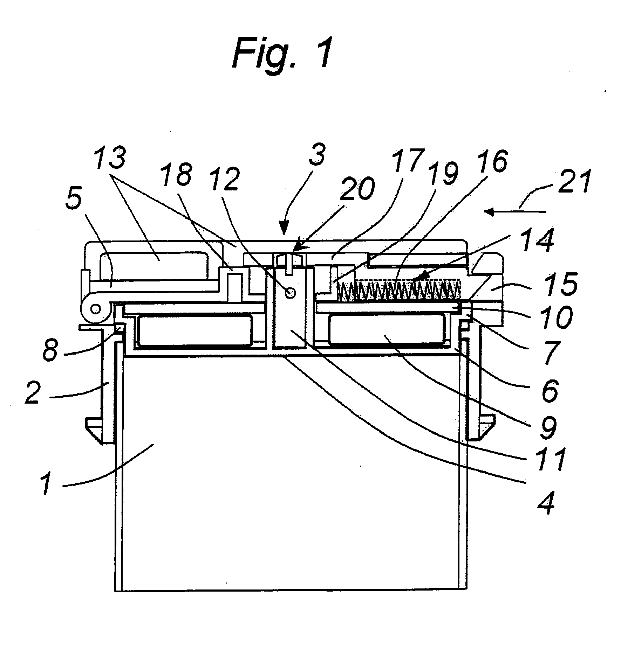

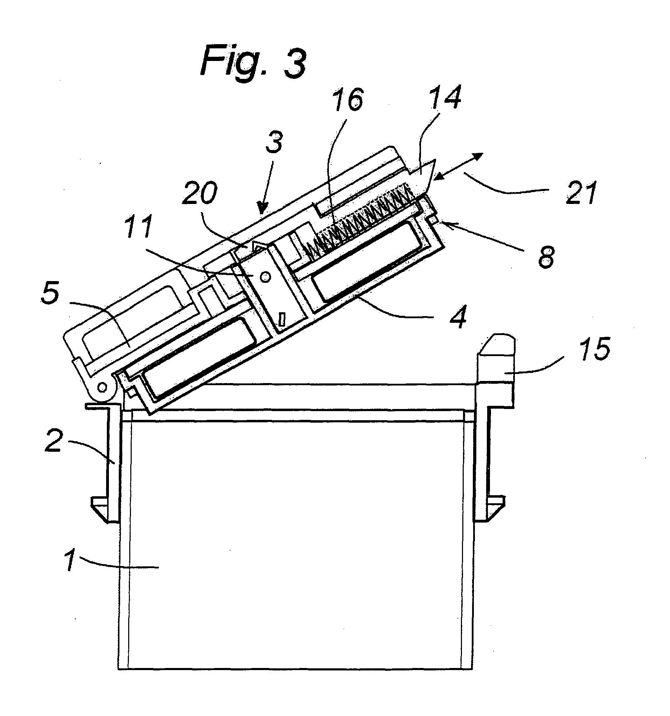

Auf dem Büchsenkörper 1 der in den Figuren 1 bis 3 dargestellten Rohrpostbüchse ist ein Büchsenkopf 2 angeordnet, welcher den Deckel 3 aufnimmt. Dieser setzt sich aus einem Dichtdeckel 4 und einem Oberdeckel 5 zusammen. Der Dichtdeckel 4 ist wangenförmig ausgebildet und seine Seitenwand 6 weist einen Absatz 7 auf. Mit diesem Absatz 7 stützt sich der Dichtdeckel 4 schwimmend mit einer Ringdichtung 8 auf dem Büchsenkopf 2 ab. Im Dichtdeckel 4 ist ein elastische Ring 9 gelagert, auf welchem eine Verstärkungsscheibe 10 aufliegt. In seiner Mitte weist der Dichtdeckel 4 eine Hülse 11 auf, welche durch die Verstärkungsscheibe 10 bis in den Oberdeckel 5 mit Spiel hineinragt, damit der Dichtdeckel 4 eine gewisse schwimmende Bewegungsfreiheit aufweist. Die Verbindung der Hülse 11 mit dem Oberdeckel erfolgt dabei durch einen Querstift 12. Auf diese Art und Weise wird ein absolut wasserdichter Verschluss der Rohrpostbüchse erreicht. Auf dem Oberdeckel 5 ist noch ein Dekkelpolster 13 vorgesehen.

Der Verschluss des Deckels 3 erfolgt durch einen auf dem Oberdeckel 5 längsbewegbar gelagerten Schieber 14, welcher in eine Rastaufnehmung 15 des Büchsenkopfes 2 eingreift und gegen die Kraft der Feder 16 in eine Freigabestellung zurückgeschoben werden kann. Der Schieber 14 ist an seinem hinteren Ende abgekröpft und liegt mit diesem Absatz 17 auf Ausbuchtungen 18 und 19 sowie auf. Der Absatz 17 trägt dabei ein Siegel 20, welches mit einer Sollbruchstelle in die Hülse 11 hineinragt.

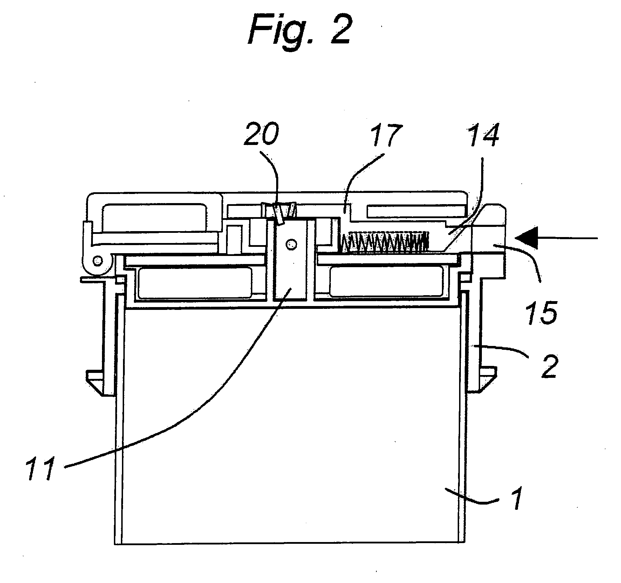

Wie Figur 2 zeigt, nimmt der Schieber 14 bei seiner Öffnungsbewegung in Richtung des Pfeiles 21 das Siegel 20 mit, welches dann beim Aufprall an der Wand der Hülse 11 zerbricht und damit anzeigt, dass die Rohrpostbüchse bereits einmal geöffnet wurde.

## Patentansprüche

1. Rohrpostbüchse mit auf einem Büchsenkörper (1) schwenk-und verschließbar angeordnetem Deckel (3), **dadurch gekennzeichnet, dass** der Deckel (3) aus einem Oberdeckel (5) und einem Dichtdeckel (4) besteht, wobei der Dichtdeckel (4) schwimmend auf einer Dichtung (8) des Büchsenkörpers (1) gelagert ist.

2. Büchse nach Anspruch 1, **dadurch gekennzeichnet, dass** der Büchsenkörper (1) mit einem Büchsenkopf (2) versehen ist und der Dichtdeckel (4) auf einer Ringdichtung (8) des Büchsenkopfes (2) aufliegt.

3. Büchse nach einem oder beiden der vorhergehenden Ansprüche, **dadurch gekennzeichnet, dass** der Oberdeckel (5) und der Dichtdeckel (4) durch eine am Dichtdeckel (4) angeordnete, den Oberdeckel (5) mit Spiel durchbrechende Hülse (11) oder dergleichen miteinander verbunden sind.

4. Büchse nach einem oder mehreren der vorhergehenden Ansprüche, **dadurch gekennzeichnet, dass** im Dichtdeckel (4) auf einem elastischen Ring (9) eine Verstärkungsscheibe (10) gelagert ist, auf welcher sich der Oberdeckel (5) abstützt.

5. Büchse nach Anspruch 4, **dadurch gekennzeichnet, dass** der Dichtdeckel (4) zur Aufnahme des elastischen Ringes (9) wannenförmig ausgebildet ist, wobei die Seitenwand (6) des Dichtdekkels (4) an ihrem dem Boden abgewandten Rand einen nach aussen gerichteten Absatz (7) zur Auflage auf dem Büchsenkörper (1) oder dem Büchsenkopf (2) aufweist.

6. Rohrpostbüchse mit auf dem Büchsenkopf (2) des Büchsenkörpers (1) schwenk- und verschließbar angeordnetem Deckel (3), **dadurch gekennzeichnet, dass** auf dem Deckel (3) ein Verschluss, bestehend aus einem gegen Federkraft (16) zurückschiebbarem und in eine Rastausnehmung (15) des Büchsenkopfes (2) eingreifenden Schieber (14) angeordnet ist.

7. Büchse nach Anspruch 6, **dadurch gekennzeichnet, dass** am Deckel (3) ein aufbrechbares Siegel (20) befestigt ist, welches mit dem Schieber (14) so verbunden ist, dass das Siegel bei einer Öffnungsbewegung des Schiebers bricht.

8. Büchse nach einem oder beiden der vorhergehenden Ansprüche 6-7, **dadurch gekennzeichnet, dass** der Schieber (14) an seinem der Rastausnehmung (15) entgegengesetzten Ende nach oben abgekröpft ist und sein Absatz (17) das Siegel (20) aufnimmt, wobei ein Teil des Siegels am Deckel (3) angreift.

9. Büchse nach einem oder mehreren der vorhergehenden Ansprüche 3 und 6-8, **dadurch gekennzeichnet, dass** das Siegel (20) teilweise in die Hülse (11) des Dichtdeckels (4) eingreift.
